# EUROPÄISCHE PATENTSCHRIFT

(11) **EP 0 532 032 B1**
(45) Veröffentlichungstag und Bekanntmachung des Hinweises auf die Patenterteilung: **17.05.1995**
(21) Anmeldenummer: 92115583.4
(22) Anmeldetag: 11.09.1992
(51) Int. Cl.: B60R 22/30, A44B 11/25

(54) **Schnellversteller für ein Gurtband-Rückhaltesystem**
Length adjustment device for a webbing system
Dispositif d'ajustement rapide pour un système de retenue par bande

(30) Priorität: 11.09.1991 DE 9111299 U
(43) Veröffentlichungstag der Anmeldung: 17.03.1993
(73) Patentinhaber: VAN RIESEN GmbH + CO, D-25462 Rellingen (DE)
(72) Erfinder: Schmelow, Martin Harald, W-2359 Kisdorf-Wohld (DE)
(74) Vertreter: Wilcken, Thomas, Dipl.-Ing.

(56) Entgegenhaltungen:
- DE-U- 8 527 732
- GB-A- 1 515 169

## Beschreibung

Die Erfindung geht aus von einem Schnellversteller für ein Gurtband-Rückhaltesystem, umfassend ein Gehäuse aus nachgiebigem Material, eine an dem Gehäuse mittels Schnappverbindung befestigte Basisplatte mit einem Durchlaß für ein hinteres Gurtband und einen mittels federbelasteter Drucktaste lösbaren Mechanismus zur Festklemmung eines vorderen Gurtbandes.

Ein derartiger Schnellversteller mit den Merkmalen des Oberbegriffs des Anspruchs 1 ist in dem DE-U-90 01 502 offenbart. Das relativ dünnwandige Gehäuse dieses Schnellverstellers ist mittels mehrerer, im wesentlichen seitlicher Schnappverbindungen und einem vorderen Nietansatz mit der Basisplatte verbunden. Die federbelastete Drucktaste ist als Drehelement ausgebildet und seitlich in dem Gehäuse drehgelagert. Diese Taste wird von der Seite des Schnellverstellers her betätigt und bewegt dabei eine Verschiebeplatte des Mechanismus für die Festklemmung des vorderen Gurtbandes zurück, das um einen Klemmsteg dieser Platte geschlungen ist und die Basisplatte nach unten durchläuft.

Es hat sich in der Praxis herausgestellt, daß sich das Gehäuse trotz der Schnappverbindungen an seinem hinteren Ende leicht von der Basisplatte ablöst und dann davon absteht, so daß es vorkommen kann, daß sich der Schnellversteller an der Kleidung der mit dem Rückhaltesystem gesicherten Person anklemmt. Es besteht auch eine gewisse Verletzungsgefahr für Personen durch den freiliegenden Bereich der Basisplatte. Des weiteren ist durch das abgelöste hintere Gehäuseende die sichere Funktion des Schnellverstellers beim Strammziehen des vorderen Gurtbandes beeinträchtigt. Ferner wirkt die Drucktaste bei ihrer Betätigung zwecks Lösung des Mechanismus nur randnah auf dessen Verschiebeplatte ein und bewirkt dadurch eine unsymmetrische Belastung dieser Platte, so daß es in einigen Fällen zu einer erschwerten Öffnungsbewegung dieser Platte kommen kann, weil sie sich verkanten kann.

Die Aufgabe der Erfindung besteht in der Verbesserung eines Schnellverstellers der einleitend angeführten Art, der bei kompaktem Aufbau des Verstellers eine einfache und dauerhaft sichere Befestigung des Gehäuses an der Basisplatte gewährleistet.

Die Lösung dieser Aufgabe ist in dem Anspruch 1 angeführt.

Durch diese Lösung kann das Gehäuse weiterhin sehr dünnwandig aus Kunststoff hergestellt werden, wobei jederzeit sichergestellt ist, daß es vollständig mit der Basisplatte verbunden bleibt, sich also davon nicht ablösen kann. Ein Ablösen der hinteren Schnappverbindung des Gehäuses von der Basisplatte wird durch das hintere Gurtband verhindert, dessen Dicke dem verbleibenden Spalt in dem Durchlaß zwischen der Rückseite der Schnappverbindung und dem ihr gegenüberliegenden Rand des Durchlasses entspricht, so daß der Schnappvorsprung des Gehäuses keinen Spielraum zur rückwärtigen Ablösung mehr hat. Die vordere, taschenartige Aussparung des Gehäuses nimmt den vorderen Randbereich der Basisplatte vollständig auf, so daß die Basisplatte weder zur Seite noch nach unten ausweichen kann. Der weitere Vorteil einer solchen Gehäusebefestigung an der Basisplatte besteht ferner darin, daß die sonst üblichen seitlichen Schnappverbindungen des Gehäuses für die seitliche Festlegung der Basisplatte entfallen können, was sich kostensenkend auf die Herstellungskosten des Schnellverstellers auswirkt.

In bevorzugter Weiterbildung des erfindungsgemäßen Schnellverstellers ist ein unbehindertes und vereinfachtes Öffnen des Klemmechanismus des Verstellers gewährleistet, indem das Verstellergehäuse zur längsverschiebbaren Aufnahme der Drucktaste ausgebildet ist, so daß diese von der Vorderseite des Verstellers her gedrückt wird. Des weiteren kann die Drucktaste im Vorderbereich ihrer Unterseite eine von seitlichen Kufen begrenzte Aussparung für den Durchlauf des vorderen Gurtbandes aufweisen, wobei die seitlichen Kufen je mit einer vorderen Anschrägung versehen sind und wobei die Drucktaste einen hinteren, oberen Absatz aufweist, der mit einer Rastkante des Gehäuses zusammenwirkt. Hierdurch braucht die Drucktaste nur noch allein mit dem Daumen betätigt zu werden, so daß ein Festhalten des Schnellverstellers zwischen Daumen und Zeigefinger entfällt, wenn der Klemmechanismus des Verstellers geöffnet werden soll. Durch die längsverschiebbare und mittige Anordnung der Drucktaste wird der Klemmechanismus nicht mehr außerhalb der Längsmitte des Schnellverstellers betätigt, so daß das das vordere Gurtband festlegende Klemmglied des Mechanismus bei seinem Zurückschieben nicht mehr verkanten kann und ein ungehindertes Öffnen des Mechanismus und damit des Schnellverstellers jeder Zeit gewährleistet ist. Ferner ermöglicht eine solche Anordnung der Drucktaste auch einen relativ großen Verstellweg des genannten Klemmgliedes, so daß der Durchlauf des vorderen Gurtbandes leicht und schnell erfolgen kann.

Die Erfindung ist nachstehend anhand eines in den anliegenden Zeichnungen dargestellten Ausführungsbeispieles näher erläutert. Es zeigen:
- Figur 1: eine Seitenansicht auf den Schnellversteller,
- Figur 2: eine Aufsicht auf den Schnellversteller nach Figur 1,
- Figur 3: eine Schnittdarstellung nach der Linie III-III in Figur 2.

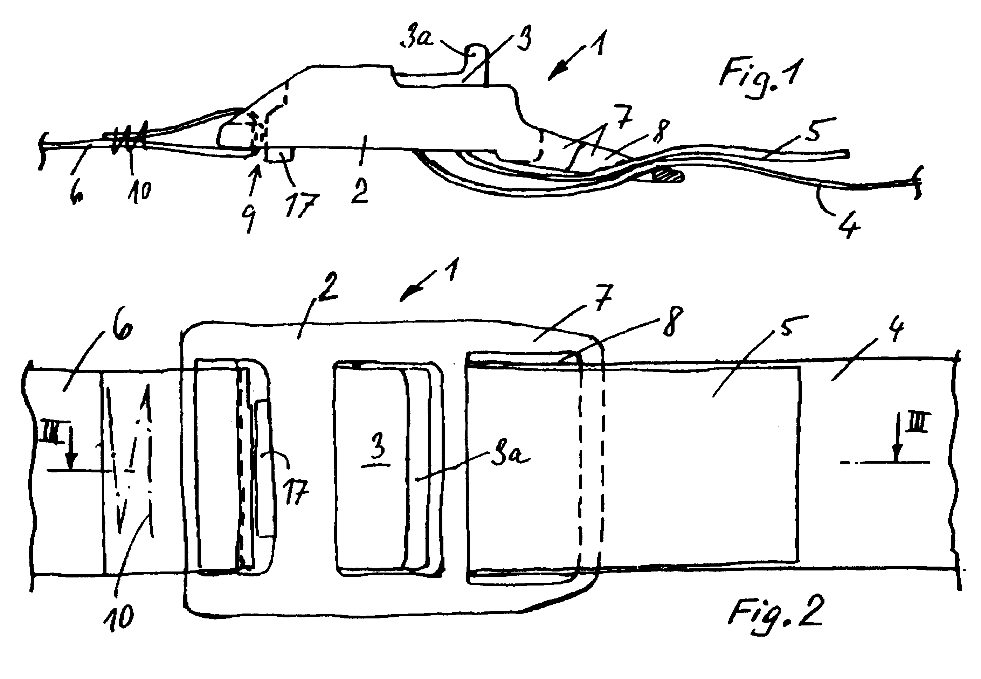

Nach den Figuren 1 und 2 umfaßt der allgemein mit 1 bezeichnete Schnellversteller ein Gehäuse 2 aus nachgiebigem Material, z. B. aus flexiblem Kunststoff, und eine teilweise aus dem Gehäuse herausragende Drucktaste 3 zur Betätigung eines noch erläuterten Klemmechanismus. Man erkennt ferner ein vorderes Gurtband 4 mit einem Endabschnitt 5 zum Strammen des Gurtbandes und ein hinteres Gurtband 6. Die Gurtbänder 4 und 6 gehören zu einem Gurtband-Rückhaltesystem, wie es z. B. in Kraftfahrzeugen zur Sicherung von Personen eingesetzt wird. Bevorzugte Rückhaltesysteme, wo der hier beschriebene Schnellversteller eingesetzt werden kann, sind sogenannte Hosenträgersysteme. Vorteilhaft weist das Gehäuse 2 einen vorderen Bügel 7 auf, der mit dem übrigen Gehäuse 2 eine größere Öffnung 8 umschließt, um das vordere Gurtband 4 zu führen, d. h. ihm in bezug auf den erwähnten Klemmechanismus eine vorbestimmte Lage zu geben, um ein sicheres Festklemmen des Gurtbandes 4 zu gewährleisten. Der Schnellversteller weist einen hinteren Durchgang 9 auf, durch den das hintere Gurtband 6 in Form einer Schleife hindurchgeführt und bei 10 in üblicher Weise vernäht ist.

Das Gehäuse ist etwa kastenförmig ausgebildet und weist eine obere Öffnung 11 auf, aus der die Drucktaste 3 herausragt. Die Taste 3 ist in Längsrichtung des Schnellverstellers gemäß dem Pfeil 12 vorzugsweise mit dem Daumen betätigbar und gelangt bei einem entsprechenden Daumendruck von einer vorderen Klemmstellung in eine hintere Lösestellung, in welcher das Gurtband 4 durch Ziehen in üblicher Weise gelockert werden kann. Bei Loslassen gelangt die Drucktaste durch den Druck einer Feder 13 automatisch wieder in ihre vordere Stellung.

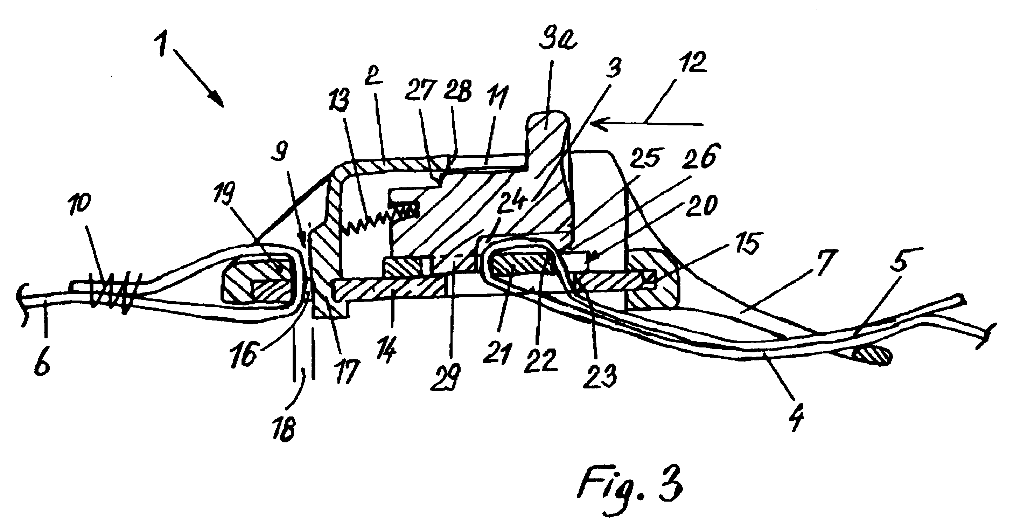

Der innere Aufbau des Schnellverstellers 1 ist aus der Schnittdarstellung nach Figur 3 genau zu erkennen. Man erkennt, daß eine ebene Basisplatte 14 mit ihrem Vorderrand in eine taschenförmige Aussparung 15 des Gehäuses 2 eingreift. Die Aussparung 15 ist so ausgebildet, daß auch die Enden der Aussparung durch das Material des Gehäuses begrenzt sind, so daß die Basisplatte 14 dadurch in der Aussparung 15 allseits festgelegt ist.

Die Basisplatte 14 weist einen hinteren Durchlaß 16 auf, durch den das hintere Gurtband 6 hindurchverläuft. Das Gehäuse 2 besitzt an einer hinteren Wand einen nach unten vorstehenden Schnappvorsprung 17, der den hinteren Durchlaß 16 nach unten durchgreift und die Basisplatte 14 hintergreift, wie es Figur 3 deutlich zeigt. Hierdurch ist das Gehäuse 2 in seinem hinteren Bereich wenigstens formschlüssig an der Basisplatte 14 befestigt. Je nach dem, ob der Schnappvorsprung 17 noch eine in Vorderrichtung des Schnellverstellers wirkende, immanente Kraft aufweist, wirkt zusätzlich noch eine Schnappkraft gegen die Basisplatte 14, um die Festlegung des Gehäuses 2 im Bereich des hinteren Durchlasses 16 an der Basisplatte noch zu verstärken.

Wenn der Schnappvorsprung 17 des Gehäuses 2 den Durchlaß 16 der Basisplatte 14 gemäß Figur 3 durchgreift, wird die effektive Breite des Durchlasses 16 verkleinert, so daß ein Spalt 18 gegeben ist, der etwa der Dicke des für diesen Durchlaß bestimmten hinteren Gurtbandes 6 entspricht. Somit kann sich der Schnappvorsprung 17 nicht zurückbewegen und nicht aus dem Durchlaß 16 herausgelangen, so daß eine sichere und dauerhafte Festlegung des Gehäuses 2 an der Basisplatte 14 im hinteren Bereich des Schnellverstellers 1 gewährleistet ist.

Gemäß Figur 3 ist nur ein Schnappvorsprung 17 vorgesehen, der mit der einen Seite des den Durchlaß 16 begrenzenden Bereiches der Basisplatte 14 in Eingriff steht. Es kann aber auch noch ein weiterer Schnappvorsprung vorgesehen sein, der dem Schnappvorsprung 17 auf der anderen Seite des Durchlasses 16 gegenüberliegt und von dem mit 19 bezeichneten Gehäusematerial ausgeht. Der vorerwähnte Spalt 18 für die Durchführung des hinteren Gurtbandes 6 wird dann zwischen diesen beiden Schnappvorsprüngen gebildet. Diese alternative Ausbildung im hinteren Bereich des Gehäuses 2 zu dessen sicherer Festlegung an der Basisplatte 14 ist zeichnerisch nicht dargestellt.

Auf der Basisplatte 14 gleitet eine den genannten Klemmechanismus mitbildende Verschiebeplatte 20, die einen Quersteg 21 aufweist, um den das vordere Gurtband 4 geschlungen ist. Die Vorderkante 22 des Quersteges 21 bildet zusammen mit der Vorderkante 23 der Basisplatte 14 einen üblichen Klemmbereich zur Festlegung des vorderen Gurtbandes 4 bzw. dessen vorderen Endabschnittes 5.

Die Drucktaste 3 weist im Vorderbereich ihrer Unterseite eine dem Quersteg 21 gegenüberliegende Aussparung 24 auf, um den Durchlauf des Gurtbandes 4, 5 zu erlauben. Die Aussparung 24 wird seitlich von Kufen 25 begrenzt, die auf der Verschiebeplatte 20 gleiten. Die seitlichen Kufen sind je mit einer vorderen Anschrägung 26 versehen, die ein Ankippen der Drucktaste 3 in ihrer vorderen Stellung erlauben, wenn am Gurtband 4 gezogen wird, um dieses festzuklemmen. Hierzu ist die Drucktaste 3 des weiteren mit einem hinteren, oberen Absatz 27 versehen, der mit einer Rastkante 28 des Gehäuses 2 zusammenwirkt. Die Rastkante 28 wird vorzugsweise durch einen Randabschnitt der oberen Gehäuseöffnung 11 gebildet. Wie Figur 3 zeigt, ist die Druckfeder 13 geneigt angeordnet, so daß auf die Taste 3 eine Druckkomponente wirkt, die den Rastabsatz 27 mit der Rastkante 28 in Eingriff bringt, wenn am Gurtband 4 gezogen wird. Dadurch ist die Klemmstellung der Verschiebeplatte 20 in gewisser Weise gesichert, um Mikroschlupf zu vermeiden. Bei Betätigung der Drucktaste 3 gemäß dem Pfeil 12 ist die Rastverbindung 27, 28 durch einen entsprechenden Druck auf den nach oben vorstehenden Teil 3a der Drucktaste 3 schnell und leicht lösbar, so daß die Taste 3 zurückverstellt wird, wobei sie mit ihrem unteren Vorsprung 29 gegen den hinteren Teil der Verschiebeplatte 20 gedrückt wird und diese zurückschiebt. Dadurch wird die Klemmung des Gurtbandes 4, 5 gelöst, so daß dieser gelockert werden kann, wenn das weiter vorstehend erwähnte Gurtband-Rückhaltesystem geöffnet werden soll. Die Druckfeder 13 kann, wie gezeigt, eine Drahtfeder sein, die im wesentlichen in der Drucktaste 3 befestigt ist. Sie kann aber auch aus einem integralen Bestandteil der Drucktaste 3 oder des Gehäuses 2 bestehen, die aus Kunststoff gefertigt sind.

## Patentansprüche

1. Schnellversteller für ein Gurtband-Rückhaltesystem, umfassend ein Gehäuse (2) aus nachgiebigem Material, eine an dem Gehäuse (2) mittels Schnappverbindung befestigte Basisplatte (14) mit einem Durchlaß (16) für ein hinteres Gurtband (6) und einen mittels federbelasteter Drucktaste (3) lösbaren Mechanismus zur Festklemmung eines vorderen Gurtbandes (4), dadurch gekennzeichnet, daß das Gehäuse (2) eine vordere, taschenartige Aussparung (15) zur Aufnahme des Vorderrandes der Basisplatte (14) aufweist, daß wenigstens ein Schnappvorsprung (17) des Gehäuses (2) den Durchlaß (16) der Basisplatte (14) für das hintere Gurtband (6) durchgreift und an einem diesen Durchlaß begrenzenden Rand der Basisplatte (14) wenigstens formschlüssig angreift und daß die Breite des verbleibenden Spaltes (18) in dem hinteren Durchlaß (16) im wesentlichen der Dicke des für diesen Durchlaß bestimmten hinteren Gurtbandes (6) entspricht.

2. Schnellversteller nach Anspruch 1, dadurch gekennzeichnet, daß das Gehäuse (2) zur längsverschiebbaren Aufnahme der Drucktaste (3) ausgebildet ist.

3. Schnellversteller nach Anspruch 2, dadurch gekennzeichnet, daß die Drucktaste (3) im Vorderbereich ihrer Unterseite eine von seitlichen Kufen (25) begrenzte Aussparung (24) für den Durchlauf des vorderen Gurtbandes (4, 5) aufweist, daß die seitlichen Kufen (25) je mit einer vorderen Anschrägung (26) versehen sind und daß die Drucktaste (3) einen hinteren, oberen Absatz (27) aufweist, der mit einer Rastkante (28) des Gehäuses (2) zusammenwirkt.

4. Schnellversteller nach Anspruch 3, dadurch gekennzeichnet, daß die Rastkante (28) durch den Rand einer oberen Gehäuseöffnung (11) gebildet ist.

5. Schnellversteller nach Anspruch 2 oder 3, dadurch gekennzeichnet, daß die Federbelastung (13) der Drucktaste (3) eine Komponente aufweist, die den oberen Absatz (27) der unbetätigten Drucktaste (3) unter Ankippen derselben mit der Rastkante (28) des Gehäuses (2) in Eingriff bringt.

## Claims

1. A quick adjuster for a belt strap retaining system, comprising a housing (2) of flexible material, a base plate (14), secured on the housing (2) by means of a snap connection, with an opening (16) for a rear belt strap (6), and a mechanism, which is able to be released by means of a spring-loaded push-button (3), to clamp a front belt strap (4), characterised in that the housing (2) has a front, pocket-like recess (15) to receive the front edge of the base plate (14), that at least one snap projection (17) of the housing (2) penetrates the opening (16) of the base plate (14) for the rear belt strap (6) and engages at least in a formlocking manner on an edge of the base plate (14) delimiting this opening, and that the width of the remaining gap (18) in the rear opening (16) corresponds substantially to the thickness of the rear belt strap (6) intended for this opening.

2. A quick adjuster according to Claim 1, characterised in that the housing (2) is constructed for longitudinally adjustable reception of the push-button (3).

3. A quick adjuster according to Claim 2, characterised in that the push-button (3) has in the front region of its underside a recess (24) delimited by lateral slide runners (25) for the front belt strap (4,5) to pass through, that the lateral slide runners (25) are each provided with a front chamfer (26) and that the push-button (3) has a rear, upper shoulder (27) which cooperates with a detent edge (28) of the housing (2).

4. A quick adjuster according to Claim 3, characterised in that the detent edge (28) is formed by the edge of an upper housing opening (11).

5. A quick adjuster according to Claim 2 or 3, characterised in that the spring loading (13) of the push-button (3) has a component which brings the upper shoulder (27) of the unactuated push-button (3), with tilting thereof, in engagement with the detent edge (28) of the housing (2).

## Revendications

1. Dispositif d'ajustement rapide pour un système de retenue par sangle, comprenant un boîtier (2) en un matériau flexible, une plaque de base (14) fixée au boîtier (2) au moyen d'une liaison par encliquetage et comportant un passage (16) pour une sangle arrière (6), et un mécanisme libérable au moyen d'un bouton-poussoir (3) sollicité par ressort, pour le serrage d'une sangle avant (4), caractérisé en ce que le boîtier (2) présente un évidement avant (15), en forme de poche, pour la réception du bord avant de la plaque de base (14), en ce qu'au moins une saillie d'encliquetage (17) du boîtier (2) pénètre dans le passage (16) de la plaque de base (14) pour la sangle arrière (6) et vient en prise, au moins par complémentarité de formes, à un bord de la plaque de base (14), qui limite cette ouverture, et en ce que la largeur de la fente (18), qui subsiste dans le passage arrière (16), correspond sensiblement à l'épaisseur de la sangle arrière (6) destinée à ce passage.

2. Dispositif d'ajustement rapide selon la revendication 1, caractérisé en ce que le boîtier (2) est constitué de manière à recevoir, déplaçable longitudinalement, le bouton-poussoir (3).

3. Dispositif d'ajustement rapide selon la revendication 2, caractérisé en ce que le bouton-poussoir (3) présente, dans la région avant de son côté inférieur, un évidement (24) limité par des patins latéraux (25), pour le passage de la sangle avant (4, 5), en ce que les patins latéraux (25) sont chacun pourvus d'un chanfrein avant (26) et en ce que le bouton-poussoir (3) présente un décrochement arrière supérieur (27), qui coopère avec une arête d'encliquetage (28) du boîtier (2).

4. Dispositif d'ajustement rapide selon la revendication 3, caractérisé en ce que l'arête d'encliquetage (28) est formée par le bord d'une ouverture supérieure (11) du boîtier.

5. Dispositif d'ajustement rapide selon la revendication 2 ou 3, caractérisé en ce que la force de sollicitation par ressort (13) du bouton-poussoir (3) présente une composante, qui amène le décochement supérieur (27) du bouton-poussoir (3) non actionné, avec basculement de ce dernier, en prise avec l'arête d'encliquetage (28) du boîtier (2).
